# FASCICULE DE BREVET EUROPEEN

(11) **EP 0 767 146 B1**
(45) Date de publication et mention de la délivrance du brevet: **14.11.2001**
(21) Numéro de dépôt: 96402109.1
(22) Date de dépôt: 03.10.1996
(51) Int. Cl.: C03B 23/023, C03B 27/004, C03B 27/04, C03B 40/00, C03B 35/20, D03D 15/12, D04B 1/00, D04B 1/10

(54) **Revêtement pour outillages en contact avec du verre chaud**
Bekleidung für Werkzeuge in Kontakt mit heissem Glas
Liner for tools in contact with hot glass

(30) Priorité: 05.10.1995 FR 9511711
(43) Date de publication de la demande: 09.04.1997
(60) Demande divisionnaire: 99121032.9
(73) Titulaire: SAINT-GOBAIN GLASS FRANCE, 92400 Courbevoie (FR)
(72) Inventeur: Frebourg, Philippe, 95300 Pontoise (FR); Gy, René, 93140 Bondy (FR); Keddad, Yasmin, 92500 Rueil Malmaison (FR)
(74) Mandataire: Renous Chan, Véronique

(56) Documents cités:
- EP-A- 0 312 439
- EP-A- 0 319 298
- EP-A- 0 477 785
- WO-A-94/01372
- WO-A-94/01373

## Description

L'invention concerne les revêtements résistants à haute température, notamment contenant du métal, et destinés tout particulièrement à servir d'intercalaires entre des plaques de verre chaud et tout outillage venant à leur contact.

L'invention s'applique plus particulièrement aux revêtements pour outillages utilisés dans des installations de traitement à chaud de feuilles de verre en vue de réaliser des vitrages du type recuits, bombés, trempés, émaillés, notamment les vitrages utilisés dans l'industrie automobile. Par « chaud », il faut donc comprendre des températures permettant le ramollissement du verre, par exemple de 600 à 700°C, mais l'invention n'est pas limitée à des utilisations à des températures aussi élevées. Comme outillages susceptibles d'être équipés de revêtements « intercalaires », on peut donc citer ceux destinés à conformer et/ou traiter les feuilles de verre comme les formes de bombage et/ou de trempe à l'air qui peuvent être pleins ou annulaires ou les formes de conformation adaptées à une trempe dite par contact. Il peut aussi s'agir d'outillages pour transporter les plaques de verre, notamment des rouleaux convoyeurs, ou tout autre moyen de préhension mécanique ou pneumatique.

Toute manipulation d'une feuille de verre chaude risque d'entraîner son marquage, d'affecter sa qualité optique. Or, la fabrication de vitrages exige une qualité optique élevée, ce qui est délicat notamment quand il s'agit de vitrages pour l'automobile où l'on doit également assurer une excellente définition du galbe, avec des formes complexes pouvant comporter plusieurs points d'inflexion qui nécessitent le plus souvent une opération de pressage de la feuille de verre entre deux formes de bombage complémentaires du type forme pleine associée à une forme annulaire.

Pour éviter la formation de piqûres sur le verre, pour absorber d'éventuelles poussières qui s'introduiraient à l'interface verre/outillage et, plus généralement, pour préserver l'intégrité de l'état de surface des feuilles de verre, il est donc connu de munir les outillages d'un revêtement dit intercalaire adapté qui puisse assurer aux feuilles un contact souple et doux. Ce revêtement doit en outre présenter une durabilité mécanique à chaud suffisante, une certaine déformabilité pour pouvoir épouser des formes d'outillage complexes, mais aussi une perméabilité à l'air adéquate, notamment s'il doit revêtir des outils de trempe, ainsi qu'une conductivité thermique pas trop élevée.

Un revêtement répondant à toutes ces exigences est déjà connu du brevet EP-B-O 312 439: il est constitué d'un tissu métallique à conductivité thermique inférieure à 3W.m⁻¹.K⁻¹ et qui est fait de mèches constituées d'une pluralité d'au moins 90 fils élémentaires de diamètre inférieur à 50 microns et organisées ensemble pour former des mailles.

L'invention a pour but de proposer un perfectionnement à ce type de revêtement métallique, notamment afin d'obtenir un revêtement qui diminue encore les risques de marquage et/ou qui présente une durabilité accrue.

L'objet de l'invention est un revêtement résistant à haute température, destiné à être intercalé entre des outillages et des plaques de verre chaud. Ce revêtement comprend un tricot comprenant des fils métalliques et/ou des fils « hybrides » comprenant un mélange de fibres élémentaires métalliques et non métallique. Ce tricot est fait d'un assemblage de colonnes de mailles, ou, dans le cas de tricots à mailles cueillies, de rangées de mailles, conférant au moins une face plane. Le tricot est en outre pourvu de jours dont la forme polygonale est déterminée par une pluralité de segments « non liés », constitués chacun par une portion d'une colonne de mailles, et de segments « liés » constitués par la mise en commun de deux ou quatre mailles entre deux colonnes ou rangées de mailles adjacentes, cette mise en commun étant obtenue par transfert réciproque de mailles d'une colonne à l'autre. Pour un tricoté à deux faces opposées planes, cette mise en commun peut être notamment de plus de deux mailles de deux colonnes de mailles adjacentes.

Selon l'invention, on comprend par « maille » une boucle élémentaire de fil reliée aux autres boucles pour former les segments du tricot.

On comprend par « jour », l'espace libre délimité par lesdits segments.

On comprend par « tricot » aussi bien les tricots à mailles cueillies que les tricots à mailles jetées. Dans le contexte de l'invention, ce terme englobe également les tissus, grillages, cannages et tresses. (A noter que dans le cas de tricots à mailles cueillies, il s'agit de « rangées » de mailles plutôt que de « colonnes» de mailles ).

On comprend également par « transfert réciproque de mailles » le fait que l'on crée une liaison entre deux colonnes de mailles de manière à ce que le fil d'une colonne de mailles donnée vienne s'insérer dans la colonne adjacente pour y former au moins une maille et que, réciproquement, le fil de cette dernière colonne vienne s'insérer dans la première pour y former au moins une maille. On a ainsi, de fait, au moins deux mailles « mises en commun » entre les colonnes au sens de l'invention. De même, on entend par tricot présentant au moins une « face plane » un tricot dont toutes les colonnes de mailles d'au moins une même face sont planes.

Le revêtement tel que défini ci-dessus présente beaucoup d'avantages. Le fait qu'il s'agisse d'un tricot lui confère une certaine extensibilité dans toutes les directions, ce qui permet de l'utiliser pour recouvrir des outillages de formes complexes, à forte courbure par exemple. La texture du tricot le rend suffisamment absorbant vis-à-vis des poussières. Conférer à ce tricot une face plane permet en outre d'éviter tout marquage des feuilles de verre puisqu'elle offre un contact très lisse. Le fait que les deux faces opposées du tricot présentent avantageusement cette caractéristique permet de l'utiliser sans plus avoir à distinguer une face « endroit » et une face « envers ». Toutefois, dans certaines applications moins exigeantes et, notamment pour des facilités de mise en oeuvre, on peut se limiter à un tricot présentant une seule face plane. Par le choix de la taille et de la géométrie des jours du tricot, on peut régler précisément le taux de perméabilité du revêtement, ce qui est important s'il est destiné à équiper des formes de trempe à l'air.

Enfin, le tricot présente une bonne résistance à l'usure mécanique. En effet, les jours évoqués plus haut ont une forte cohésion, en ce sens qu'il y a au moins deux mailles dans les segments « liés » qui sont le résultat de l'interaction entre deux colonnes de mailles, ce qui signifie que si jamais une de ces mailles « en commun » devait rompre lors d'une utilisation prolongée, il resterait au moins une seconde maille « commune ». Cela évite tout risque de rupture locale brutale du revêtement, provoquant un contact ponctuel direct entre outillage et verre chaud et donc un marquage de ce dernier.

Ces jours selon l'invention peuvent donc être de formes très diverses. Ainsi, ils peuvent être symétriques, en présentant notamment des segments liés tous de même longueur et des segments non liés également tous de même longueur. Mais ils peuvent tout aussi bien être dissymétriques, avec des segments liés et non liés de longueurs différentes. La structure du tricot selon l'invention offre donc de nombreuses possibilités pour adapter au mieux le revêtement à son utilisation finale. On peut par exemple adopter des jours à forme hexagonale créant un aspect alvéolaire ou encore en nid d'abeille.

En outre, la taille et/ou la forme des jours peuvent varier sur l'ensemble du tricot, créant dans le tricot des zones de tricotage d'aspect et de propriétés différentes. Il peut en effet avoir avantage à adopter, par exemple, une perméabilité différenciée dans le tricot, en distinguant notamment entre zone périphérique et zone centrale lorsqu'il est destiné à couvrir une forme pleine.

Usuellement, on choisit cependant une taille de jours telle qu'ils présentent un périmètre compris entre 8 et 80 millimètres, de préférence entre 20 et 40 millimètres. De par la structure du tricot, ces jours présentent une certaine déformabilité, mais leur périmètre reste globalement constant.

Avantageusement, les mailles sont tricotées à partir de fil filé, simple ou composé. Ce type de fil est obtenu par exemple à partir d'une mèche continue de fils élémentaires, qui subit un craquage mécanique de façon à le casser en fibres discontinues, courtes, de longueur aléatoire, le craquage étant suivi d'une ou plusieurs torsions (fil filé simple), puis éventuellement d'un retordage pour fixer lesdites torsions (fil filé composé). Tout autre type d'opération de filature aboutissant à un résultat similaire peut être utilisé, notamment la filature dite « à jet d'air ».

Ce type de fil est intéressant à utiliser, d'abord parce que, bien que métallique, sa conductivité thermique est relativement basse, ce qui est plutôt favorable dans le cas où le verre subit un traitement thermique et/ou est susceptible de présenter une température légèrement différente de celle de l'outillage. En outre, le fait qu'il soit constitué de fibres discontinues améliore le « moelleux » du tricot et lui confère une grande souplesse dans l'épaisseur. En dernier lieu, le fil filé se prête particulièrement bien à l'opération de tricotage grâce à sa souplesse. En fait, les fibres discontinues confèrent au fil filé un aspect particulier, avec des fibres dites marginales dont une extrémité est coincée par torsion dans le fil et dont l'autre extrémité dépasse, ce qui permet notamment de répartir de manière optimale le poids de la feuille de verre sur l'ensemble du tricot. Tout concourt donc, avec un tel fil, à préserver la qualité optique du verre.

Le fil que l'on tricote peut être unique, notamment en présentant un numéro métrique compris entre 1 et 30, de préférence entre 1,5 et 10 lorsqu'il est en métal du type acier (le numéro métrique indique la longueur de fil nécessaire, en mètre, pour obtenir une masse de 1 gramme). Lorsque le fil n'est pas en acier, mais en matériau céramique ou en un autre métal par exemple, il faut pondérer ces valeurs de numéro métrique en fonction du rapport des densités entre le métal et le matériau en question, afin que le diamètre apparent du fil soit comparable. Ainsi, pour un fil dont les fibres élémentaires seraient 4 fois moins denses que le métal du type acier, les valeurs-limites de numéro métrique indiquées ci-dessus seraient à multiplier par 4.

On peut aussi tricoter un assemblage de plusieurs de ces fils, notamment de 2 à 5 fils, assemblage n'imposant pas nécessairement une opération de retordage.

De préférence, le fil à partir duquel le tricot est fait est constitué d'au moins 90 fibres élémentaires, chaque fibre élémentaire ayant un diamètre inférieur à 50 micromètres, et notamment compris entre 8 et 20 micromètres.

En fait, les deux paramètres qui sont d'une part le nombre de fibres élémentaires de chaque fil, d'autre part le nombre de fils assemblés permettent de faire varier comme on le souhaite la grosseur de fil qui sera effectivement tricoté, et donc, en final, l'épaisseur du tricot. Peut aussi intervenir un troisième paramètre, qui est le nombre de torsions qu'a subi le fil avant son tricotage.

Venons-en maintenant plus précisément au type de matériau constitutif du tricot selon l'invention : il doit être résistant à haute température, c'est la raison pour laquelle on peut avantageusement choisir un tricot comprenant des fils métalliques. Il peut d'ailleurs être majoritairement, voire totalement, constitué de fils métalliques. Cependant, on peut également incorporer dans le tricot, outre ces fils en métal, des fils non métalliques résistants à la chaleur, tout particulièrement à base de matériau céramique, de carbure de silicium, de polyimide ou de polyamide aromatique comme le polymère connu sous la dénomination commerciale KEVLAR. Comme on l'a vu plus haut, ces fils, qu'ils soient métalliques ou non, peuvent être le résultat de la réunion d'un certain nombre de fils élémentaires.

Une autre variante consiste à ce que le tricot comprenne des fils « hybrides », c'est-à-dire des fils contenant un mélange de fibres élémentaires en métal et de fibres élémentaires non métalliques, du type céramique, carbure de silicium, polyimide ou polyamide aromatique.

Les fils ou fibres élémentaires du tricot qui sont métalliques sont avantageusement choisis à base d'acier inoxydable, notamment du type 316L. Un mode de réalisation préféré consiste à choisir un acier essentiellement austénitique. L'acier comporte par exemple une teneur massique en chrome d'au moins 17 %, notamment comprise entre 17 % et 19 %, et une teneur en nickel d'au moins 12 %, notamment comprise entre 13 % et 14 %, tout en conservant une teneur massique en carbone inférieure ou égale à 0,03%. Ce type d'acier présente en effet une très bonne résistance à l'oxydation à haute température, une très haute durabilité mécanique, ce qui garantit au revêtement une durée de vie prolongée.

De préférence, on choisit l'épaisseur du revêtement inférieure à 5 mm, notamment comprise entre 1 et 3 mm. Sa conductivité thermique reste usuellement inférieure à 3 W.m⁻¹.K⁻¹, notamment de 0,1 à 0,2 W.m⁻¹.K⁻¹. Sa perméabilité à l'air peut être réglée, comme on l'a vu précédemment, à des valeurs variées. Elle est notamment d'au moins 2 m/s. La perméabilité est ici définie par le nombre de mètres-cube capables de traverser en une seconde l'équivalent d'un mètre carré du matériau, lorsque la différence de pression de part et d'autre de ce dernier est de 200 Pa (Pascal). La mesure de perméabilité à l'air est conduite suivant les spécifications de la norme NF EN ISO 9237 à partir d'une surface d'essai de 20 cm².

Lorsqu'un tel revêtement est utilisé pour revêtir des outils de trempe, il peut être avantageux d'avoir une perméabilité à l'air plus importante ; dans ce cas, celle-ci est notamment d'au moins 5 m/s et de préférence d'au moins 7 m/s, en mètres-cube d'air capables de traverser l'équivalent d'un mètre carré du matériau lorsque la différence de pression de part et d'autre de ce dernier est de 200 Pa (Pascal), à partir d'une surface d'essai de 20 cm².

Selon une variante, les deux faces du tricot peuvent présenter la même structure, le même aspect, mais se différencier par la nature des fils qui les constituent. Ainsi, on peut distinguer la face destinée à être « côté verre », faite de fils en matériau spécifiquement optimisé pour éviter le marquage, et la face destinée à être « côté outillage » qui peut être constituée de fils en un matériau (ou un mélange de matériaux) différent, moins coûteux notamment.

Selon une autre variante, dans le cas où les deux faces du tricot sont planes, elles peuvent être aussi avantageusement identiques entre elles, ce qui supprime tout risque d'erreur lorsqu'on vient fixer ledit tricot sur l'outillage.

Pour obtenir des tricots présentant ainsi deux faces planes, différentes techniques de tricotage connues de l'industrie textile sont envisageables. L'une d'entre elles consiste à avoir recours à une machine de tricotage dite à double fonture : c'est-à-dire une machine à deux rangées d'aiguilles tricotant en parallèle, créant ainsi les mailles constituant deux « nappes » extérieures planes. La machine de tricotage est en outre de préférence choisie de manière à fabriquer un tricot à mailles jetées, du type machine Rachel. Ce type de machine autorise en effet un choix très large de dimensions de tricot, notamment en ce qui concerne sa largeur. On peut ainsi obtenir des tricots sous forme de bandes étroites, ce qui est tout-à-fait adapté pour servir de revêtements à des formes annulaires de bombage et/ou trempe. Ce type de machine permet aussi de fabriquer directement des tricots tubulaires, utilisables pour couvrir des rouleaux convoyeurs notamment.

Comme évoqué plus haut, l'invention concerne également l'application du revêtement précédemment décrit au recouvrement d'outillages pour plaques de verre au cours de leur traitement thermique du type recuit, bombage, trempe à l'air ou par contact, outillages notamment du type formes pleines ou cadres de bombage et/ou trempe. Elle concerne également l'application du revêtement au recouvrement d'éléments de support et/ou de transport de plaques de verre chaud, comme des rouleaux transporteurs, un tapis convoyeur, tout moyen de préhension mécanique ou pneumatique, notamment par aspiration.

D'autres détails et caractéristiques avantageuses de l'invention ressortent de la description ci-après de différents modes de réalisation, non limitatifs, du revêtement, à l'aide des figures annexées qui représentent :
- **figure 1 :** une représentation éclatée de deux portions de colonnes de mailles adjacentes d'un tricot selon l'invention, présentant deux faces opposées planes,
- **figure 2 :** les mêmes portions de colonnes du tricot, vues de face, la face arrière étant cachée,
- **figures 3 et 4 :** deux variantes de forme de jours du tricot,
- **figure 5 :** une vue schématique agrandie d'un jour selon la figure 3
- **figure 6 :** une représentation éclatée de deux portions de colonnes de mailles adjacentes d'un tricot selon l'invention présentant une face plane.

Toutes ces figures sont extrêmement schématiques. Elles représentent différentes variantes d'un tricot selon l'invention.

Dans tous les exemples qui suivent, le tricot est à mailles jetées et utilise des fils en acier inoxydable majoritairement austénitique, comportant une teneur massique en chrome de 18 %, une teneur massique en nickel de 13 % et une teneur massique en carbone inférieure à 0,03 %.

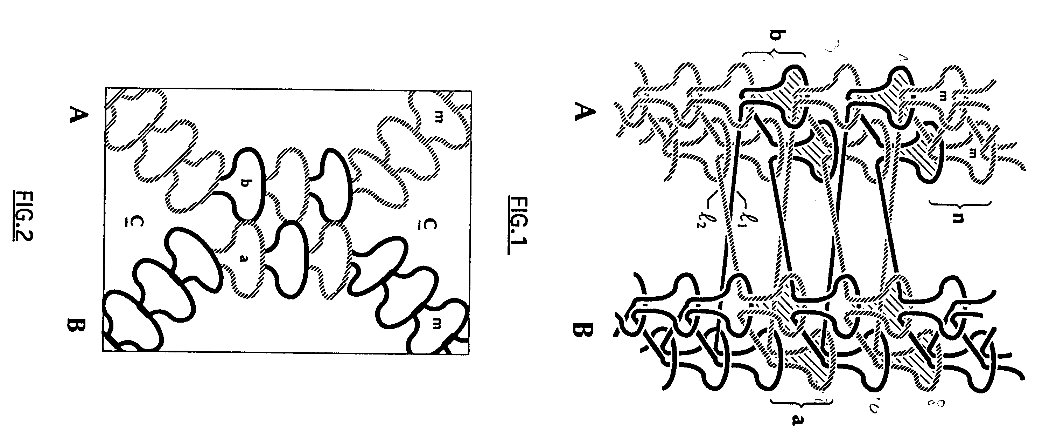

Les fils sont constitués de deux fils filés retordus, de numéro métrique respectif de 11 mètres par gramme, fils filés constitués d'environ 100 filaments de base de diamètre apparent 12 micromètres. Dans l'exemple correspondant aux figures 1 à 5, le tricotage s'effectue à l'aide d'une machine dite Rachel à double fonture de jauge 9 (la jauge est le nombre d'aiguilles disposées sur une distance d'un pouce). Dans l'exemple correspondant à la figure 6, le tricotage s'effectue à l'aide d'une machine du type Rachel à simple fonture.

Si on se reporte à la figure 1, on voit, de manière éclatée, deux colonnes A, B de mailles adjacentes d'un tricot selon l'invention. Chaque colonne est constituée de rangées « n » comportant deux mailles (ou boucles) « m » de fil. On voit d'après la figure, que ce qui est appelée « rangée » est un ensemble de deux mailles (boucles) adjacentes d'une même colonne de mailles, chacune étant disposée sur une des faces du tricot. Pour créer des jours dans le tricot, on fait interagir localement et régulièrement sur toute leur longueur ces deux colonnes de mailles de la façon suivante : un fil I₁ provenant de la colonne de mailles B vient s'insérer dans la colonne de mailles A. Réciproquement, un fil I₂ provenant de la colonne de mailles A vient s'insérer dans la colonne de mailles B.

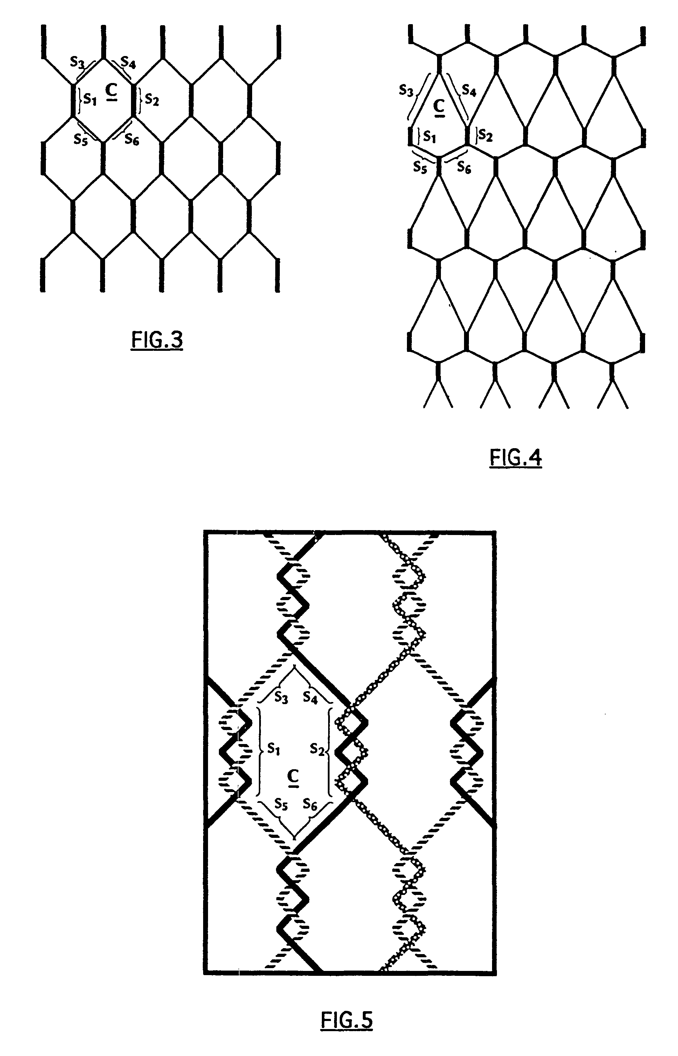

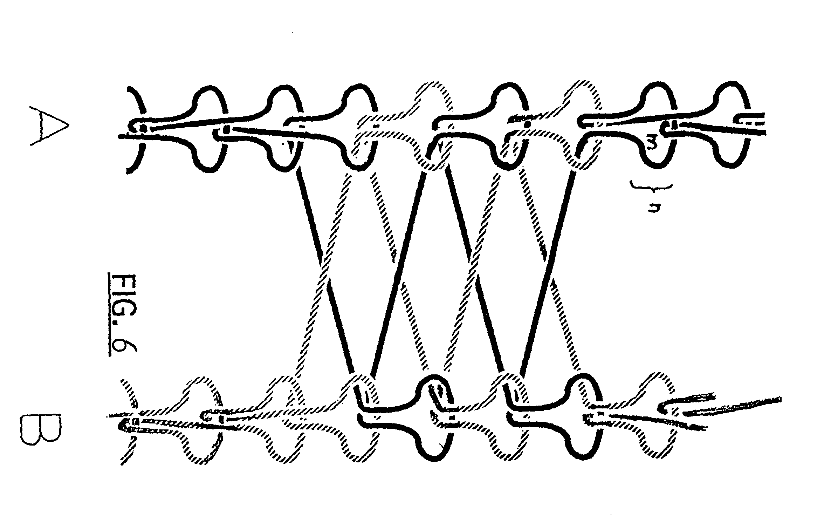

Le fil I₁ vient créer une rangée « b » dans la colonne A, et le fil I₂ vient créer une rangée « a » dans la colonne B. Ce transfert de fils crée ainsi un lien entre les deux colonnes. Comme représenté en figure 1, on voit que 4 liens sont ainsi créés à la suite, avec donc un double transfert de deux rangées d'une colonne à l'autre. L'ensemble des mailles « mises en commun » par ces transferts réciproques rapproche les deux colonnes et constitue un segment « lié » au sens de l'invention qui va permettre d'obtenir des jours C de forme et de taille variables. Cela est schématisé en figure 2 où l'on voit que les 4 liens créés entre les colonnes A et B forment un segment lié constitué de 6 rangées au total, soit 12 mailles. Il suffit alors de choisir le nombre de mailles ainsi mises en commun, et le nombre de mailles non mises en commun entre deux colonnes. Pour plus de clarté, ce principe est schématiquement représenté en figure 5 : les croisillons symbolisent la mise en commun d'un certain nombre de mailles entre deux colonnes : chaque jour C est donc, dans cette représentation, délimité par deux segments liés s₁ et s₂ et par quatre segments non liés s₃, s₄, s₅ et s₆, de manière à obtenir une forme globalement hexagonale.

Les figures 3 et 4, de manière encore plus schématique, représentent deux types de jours C : en figure 3, on retrouve un motif hexagonal symétrique avec deux segments liés s₁, s₂ de même longueur, comprenant par exemple 6 rangées en commun, et quatre segments non liés s₃, s₄, s₅, s₆ de même longueur et comprenant par exemple 2 rangées. En figure 4, les jours sont cette fois dissymétriques, encore de forme hexagonale, mais avec deux segments liés s₁, s₂ de même longueur comprenant 2 rangées en commun, deux segments non liés s₃, s₄ de même longueur comprenant chacun 2 rangées et deux segments non liés s₅, s₆ de même longueur comprenant chacun 4 rangées.

De nombreuses variantes sont bien sûr possibles : les jours peuvent ainsi, par exemple, être sous forme de losange, notamment lorsque la longueur des segments liés est très petite par rapport à la longueur des segments non liés.

Le tricot obtenu par double fonture présente globalement deux faces opposées identiques et très planes, ce qui est excellent sur le plan de la qualité optique : on a en fait des colonnes de mailles à section approximativement « carrée » et dont deux faces opposées constituent celles du tricot.

Il est possible d'insérer entre les deux « nappes » de mailles qui constituent les faces extérieures du tricot au moins un fil supplémentaire afin de créer une structure tridimensionnelle dont l'épaisseur et la souplesse peuvent être contrôlées par la nature, le nombre et la longueur des fils rejoignant les deux nappes de mailles.

La figure 6 montre, de manière éclatée, deux colonnes (A, B) de mailles adjacentes d'un autre tricot selon l'invention, présentant une seule face plane. A la différence de l'exemple précédent, chaque rangée « n » comporte une maille « m » de fil. L'interaction de deux colonnes (A, B) de mailles se fait de la même manière que dans l'exemple précédent. Par les transferts réciproques, on obtient six mailles (m) mises en commun entre les deux colonnes (A, B).

Les manières dont un fil d'une colonne vient s'insérer dans la colonne adjacente peuvent être très diverses. Dans le cas de la figure 1, on a vu que le fil I₁ vient créer une rangée « b » dans la colonne A, puis « retourne » dans sa colonne de départ B. Il pourrait tout aussi bien n'y créer qu'une maille « m ».

Il va de soi que l'invention ne se limite pas à ce mode de réalisation : il est tout aussi possible que ce fil I₁, une fois inséré dans la colonne A, y « reste » pour y créer plusieurs rangées (ou plusieurs mailles) à la suite dans cette colonne. En outre, il n'est pas obligatoire qu'il « retourne » dans sa colonne B, et peut tout aussi bien aller ensuite s'insérer dans la colonne (non représentée) qui est de l'autre côté de la colonne A.

En conclusion, les tricots qui entrent dans le cadre de l'invention, sont munis de jours « c » dont la forme polygonale est déterminée par une pluralité de segments « non liés » constitués chacun par une portion de colonnes de mailles et de segments « liés » constitués par la mise en commun d'au moins deux mailles « m » entre deux colonnes de mailles (A, B) adjacentes :
□ les tricots présentant une face plane ont des segments liés constitués par la mise en commun de deux mailles, quatre, six ou plus,
□ les tricots présentant deux faces planes ont des segments liés constitués par la mise en commun de plus de quatre mailles, notamment 8ou 12.

## Revendications

1. Revêtement résistant à haute température destiné à être intercalé entre des outillages et des plaques de verre chaud, ***caractérisé en ce que*** ledit revêtement comprend un tricot comprenant des fils métalliques et/ou des fils « hybrides » comprenant un mélange de fibres élémentaires métalliques et non métalliques fait d'un assemblage de colonnes de mailles, ou, dans le cas de tricots à mailles cueillies, de rangées de mailles, conférant audit tricot au moins une face plane, le tricot étant muni de jours (C) dont la forme polygonale est déterminée par une pluralité de segments « non liés » (S₃, S₄, S₅, S₆) constitués chacun par une portion d'une colonne de mailles et de segments « liés » (S₁, S₂) constitués par la mise en commun de plus de quatre mailles (m) entre deux colonnes (A, B) ou rangées de mailles adjacentes, mise en commun obtenue par transfert réciproque de mailles (m) d'une colonne à l'autre.

2. Revêtement selon la revendication 1, ***caractérisé en ce que*** le tricot, notamment obtenu par une machine de tricotage à double fonture, présente deux faces opposées planes.

3. Revêtement selon la revendication 1, ***caractérisé en ce que*** le tricot, notamment obtenu par une machine de tricotage à simple fonture, présente une face plane.

4. Revêtement selon l'une des revendications précédentes, ***caractérisé en ce que*** le tricot comprend également des fils non métalliques, du type fibres céramique, fibres en carbure de silicium, fibres en polyimide ou fibres en polyamide aromatique.

5. Revêtement selon l'une des revendications précédentes, ***caractérisé en ce que*** le tricot comprend des fils « hybrides » contenant un mélange de fibres élémentaires métalliques et non métalliques choisis en céramique, carbure de silicium, polyimide ou polyamide aromatique.

6. Revêtement selon l'une des revendications précédentes, ***caractérisé en ce qu'au*** moins une partie des fils ou fibres élémentaires métalliques du tricot est à base d'acier inoxydable, notamment du type 316L, de préférence essentiellement austénitique.

7. Revêtement selon la revendication 6, ***caractérisé en ce que*** l'acier inoxydable comprend une teneur massique en chrome d'au moins 17%, notamment comprise entre 17% et 19%, et une teneur massique en nickel d'au moins 12%, notamment comprise entre 13% et 14%, et de préférence une teneur massique en carbone inférieure ou égale à 0,03%.

8. Revêtement selon l'une des revendications précédentes, ***caractérisé en ce que*** les jours ont une forme symétrique, avec notamment des segments « liés » tous de même longueur et des segments « non liés » tous de même longueur.

9. Revêtement selon l'une des revendications 1 à 7, ***caractérisé en ce que*** les jours ont une forme dissymétrique avec des segments « liés » et « non liés » de longueurs différentes.

10. Revêtement selon l'une des revendications précédentes, ***caractérisé en ce que*** les segments déterminant la forme des jours sont constitués de plus de 2 mailles, notamment de 2 à 10 mailles, de préférence 2 à 6 mailles.

11. Revêtement selon l'une des revendications précédentes, ***caractérisé en ce que*** les jours ont une forme hexagonale.

12. Revêtement selon l'une des revendications précédentes, ***caractérisé en ce que*** la taille et/ou la forme des jours varie(nt) sur l'ensemble du tricot, créant dans le tricot des zones de tricotage d'aspect et de propriétés différentes.

13. Revêtement selon l'une des revendications précédentes, ***caractérisé en ce que*** les jours présentent un périmètre compris entre 8 mm et 80 mm, notamment entre 20 et 40 mm.

14. Revêtement selon l'une des revendications précédentes, ***caractérisé en ce que*** les mailles du tricot sont des mailles jetées.

15. Revêtement selon l'une des revendications précédentes, ***caractérisé en ce que*** les mailles sont tricotées à partir de fil filé, simple ou composé.

16. Revêtement selon l'une des revendications précédentes, ***caractérisé en ce que*** les mailles sont tricotées à partir soit d'un seul fil, notamment d'un numéro métrique compris entre 1 et 30, par exemple compris entre 1,5 et 10 quand il est métallique, soit d'un assemblage de plusieurs de ces fils, notamment de 2 à 5 fils.

17. Revêtement selon l'une des revendications précédentes, ***caractérisé en ce que*** les fils à partir desquels le tricot est fait sont constitués d'au moins 90 fibres élémentaires, chaque fibre élémentaire ayant notamment un diamètre inférieur à 50 micromètres, et de préférence compris entre 8 et 20 micromètres.

18. Revêtement selon l'une des revendications précédentes, ***caractérisé en ce que*** l'épaisseur du tricot est inférieure à 5 mm, notamment comprise entre 1 et 3 mm.

19. Revêtement selon l'une des revendications précédentes, ***caractérisé en ce que*** le tricot présente une conductivité thermique inférieure à 3W.m⁻¹.K⁻¹, notamment comprise entre 0,1 et 0,2W.m⁻¹.K⁻¹.

20. Revêtement selon l'une des revendications précédentes, ***caractérisé en ce que*** le tricot présente une perméabilité à l'air d'au moins 2 m/s suivant la norme NF EN ISO 9237.

21. Revêtement selon l'une des revendications précédentes, ***caractérisé en ce que*** le tricot présente deux faces qui se distinguent par la nature des fils qui les constituent.

22. Revêtement selon la revendication 21, ***caractérisé en ce que*** le tricot présente deux faces identiques.

23. Application du revêtement selon l'une des revendications précédentes au recouvrement d'outillages pour plaques de verre au cours de leurs traitements thermiques du type recuit, bombage, trempe à l'air ou par contact, comme des formes pleines ou des cadres de bombage et/ou de trempe.

24. Application du revêtement selon l'une des revendications 1 à 22 au recouvrement d'éléments de support et/ou de transport de plaques de verre chaud, comme des rouleaux transporteurs, tapis convoyeurs, tout moyen de préhension mécanique ou pneumatique, notamment par aspiration.

## Claims

1. Lining which is resistant to high temperatures and inserted between equipment and hot glass plates, **characterized in that** said lining comprises a knitted fabric incorporating metallic and/or "hybrid" yarns constituted by a mixture of metallic and non-metallic elementary fibres formed from an assembly of stitch columns, or, in the case of gathered stitch knitted fabrics, rows of stitches, giving said knitted fabric at least one planar face, the knitted fabric being provided with openings (C), whose polygonal shape is determined by a plurality of "unlinked" segments (S₃, S₄, S₅, S₆), each constituted by a portion of a stitch column and "linked" segments (S₁, S₂) constituted by the bringing together of more than four stitches (m) between two columns (A, B) or rows of adjacent stitches, said bringing together being obtained by a reciprocal transfer of stitches (m) from one column to the other.

2. Lining according to claim 1, **characterized in that** the knitted fabric, more particularly obtained by a double needle-bed knitting machine, has two opposite, planar faces.

3. Lining according to claim 1, **characterized in that** the knitted fabric, more particularly obtained by a single needle-bed knitting machine, has one planar face.

4. Lining according to one of the preceding claims, **characterized in that** the knitted fabric also comprises non-metallic yarns such as ceramic fibres, silicon carbide fibres, polyimide fibres or aromatic polyamide fibres.

5. Lining according to one of the preceding claims, **characterized in that** the knitted fabric comprises "hybrid" yarns containing a mixture of elementary, metallic or non-metallic fibres which can be ceramic, silicon carbide, polyimide or aromatic polyamide.

6. Lining according to one of the preceding claims, **characterized in that** at least one part of the elementary, metallic yarns or fibres of the knitted fabric is based on stainless steel, in particular of type 316L, and preferably essentially austenitic.

7. Lining according to claim 6, **characterized in that** the stainless steel has a chromium weight content of at least 17%, particularly between 17 and 19%, and a nickel weight content of at least 12%, particularly between 13 and 14%, and preferably a carbon weight content equal to or below 0.03%.

8. Lining according to one of the preceding claims, **characterized in that** the openings have a symmetrical shape, with in particular "linked" segments all having the same length and "unlinked" segments all having the same length.

9. Lining according to one of the claims 1 to 7, **characterized in that** the openings have an asymmetrical shape with "linked" and "unlinked" segments of different lengths.

10. Lining according to one of the preceding claims, **characterized in that** the segments determining the shape of the openings are constituted by more than 2, particularly 2 to 10 and preferably 2 to 6 stitches.

11. Lining according to one of the preceding claims, **characterized in that** the openings have a hexagonal shape.

12. Lining according to one of the preceding claims, **characterized in that** the size and/or shape of the openings vary over the entire knitted fabric, creating in the latter knitting zones having different appearances and properties.

13. Lining according to one of the preceding claims, **characterized in that** the openings have a perimeter between 8 and 80 mm, particularly between 20 and 40 mm.

14. Lining according to one of the preceding claims, **characterized in that** the stitches of the knitted fabric are forward stitches.

15. Lining according to one of the preceding claims, **characterized in that** the stitches are knitted from a single or composite, spun yarn.

16. Lining according to one of the preceding claims, **characterized in that** the stitches are knitted either from a single yarn, particularly of metric count between 1 and 30, e.g. between 1.5 and 10 when it is metallic, or an assembly of several such yarns, particularly 2 to 5 yarns.

17. Lining according to one of the preceding claims, **characterized in that** the yarns from which the knitted fabric is made are constituted by at least 90 elementary fibres, each elementary fibre more particularly having a diameter below 50 micrometers and preferably between 8 and 20 micrometers.

18. Lining according to one of the preceding claims, **characterized in that** the thickness of the knitted fabric is below 5 mm, particularly between 1 and 3 mm.

19. Lining according to one of the preceding claims, **characterized in that** the knitted fabric has a thermal conductivity below 3W.m⁻¹.K⁻¹, particularly between 0.1 and 0.2W.m⁻¹.K⁻¹.

20. Lining according to one of the preceding claims, **characterized in that** the knitted fabric has an air-permeability of at least 2 m/s in accordance with NF standard EN ISO 9237.

21. Lining according to one of the preceding claims, **characterized in that** the knitted fabric has two faces differing by the nature of the yarns forming the same.

22. Lining according to claim 21, **characterized in that** the knitted fabric has two identical faces.

23. Application of the lining according to one of the preceding claims to the covering of equipment for glass plates during the heat treatment thereof such as annealing, bending, air or contact tempering, such as solid shapes or bending and/or tempering frames.

24. Application of the lining according to one of the claims 1 to 22 to the covering of support or conveying members for hot glass plates, such as conveying rolls, conveyor belts, any mechanical or pneumatic, particularly suction-based gripping means.

## Patentansprüche

1. Hochtemperaturbeständiger Überzug für die Anordnung zwischen Werkzeugen und heißen Glasscheiben, **dadurch gekennzeichnet, dass** er ein Gestrick umfasst, das Metalldrähte und/oder "Hybridfäden", die ein Gemisch aus metallischen und nichtmetallischen Elementarfäden enthalten, umfasst und aus einer Verbindung von Maschenstäbchen oder, im Fall von Kuliergewirken, von Maschenreihen hergestellt ist, die dem Gestrick mindestens eine flache Seite geben, wobei das Gestrick mit Öffnungen (C) versehen ist, deren polygonale Form von einer Vielzahl "unverbundener" Abschnitte (S₃, S₄, S₅, S₆), die jeweils von einem Teil eines Maschenstäbchens gebildet werden, und "verbundener" Abschnitte (S₁, S₂), die durch den Zusammenschluß von mehr als vier Maschen (m) zwischen zwei benachbarten Maschenstäbchen (A, B) oder Maschenreihen gebildet werden, bestimmt wird, wobei der Zusammenschluß durch gegenseitige Übertragung von Maschen (m) von einem Maschenstäbchen auf das andere erhalten wird.

2. Überzug nach Anspruch 1, **dadurch gekennzeichnet, dass** das Gestrick, das insbesondere durch eine doppelfonturige Strickmaschine erhalten ist, zwei einander gegenüberliegende flache Seiten aufweist.

3. Überzug nach Anspruch 1, **dadurch gekennzeichnet, dass** das Gestrick, das insbesondere durch eine einfonturige Strickmaschine erhalten ist, eine flache Seite aufweist.

4. Überzug nach einem der vorhergehenden Ansprüche, **dadurch gekennzeichnet, dass** das Gestrick auch nichtmetallische Fasern vom Typ Keramikfasern, Siliciumcarbidfasern, Polyimidfasern oder Fasern aus aromatischem Polyamid enthält.

5. Überzug nach einem der vorhergehenden Ansprüche, **dadurch gekennzeichnet, dass** das Gestrick "Hybridfäden" umfasst, die ein Gemisch aus metallischen und nichtmetallischen Elementarfäden enthalten, die aus Keramik, Siliciumcarbid, Polyimid oder aromatischem Polyamid ausgewählt sind.

6. Überzug nach einem der vorhergehenden Ansprüche, **dadurch gekennzeichnet, dass** wenigstens ein Teil der Metalldrähte oder metallischen Elementarfäden des Gestricks auf der Basis von rostfreiem Stahl, insbesondere vom Typ 316L, und vorzugsweise im Wesentlichen austenitisch ist.

7. Überzug nach Anspruch 6, **dadurch gekennzeichnet, dass** der rostfreie Stahl einen Chromgehalt von mindestens 17 Gew.-%, insbesondere von 17 bis 19 Gew.-%, einen Nickelgehalt von mindestens 12 Gew.-%, insbesondere von 13 bis 14 Gew.-%, und vorzugsweise einen Kohlenstoffgehalt von unter oder gleich 0,03 Gew.-% enthält.

8. Überzug nach einem der vorhergehenden Ansprüche, **dadurch gekennzeichnet, dass** die Öffnungen eine symmetrische Form mit insbesondere "verbundenen" Abschnitten, die alle dieselbe Länge haben, und "unverbundenen" Abschnitten, die alle dieselbe Länge haben, besitzen.

9. Überzug nach einem der Ansprüche 1 bis 7, **dadurch gekennzeichnet, dass** die Öffnungen eine asymmetrische Form mit "verbundenen" und "unverbundenen" Abschnitten von unterschiedlicher Länge besitzen.

10. Überzug nach einem der vorhergehenden Ansprüche, **dadurch gekennzeichnet, dass** die Abschnitte, welche die Form der Öffnungen bestimmen, aus mehr als 2 Maschen, insbesondere 2 bis 10 Maschen, und vorzugsweise 2 bis 6 Maschen bestehen.

11. Überzug nach einem der vorhergehenden Ansprüche, **dadurch gekennzeichnet, dass** die Öffnungen eine hexagonale Form besitzen.

12. Überzug nach einem der vorhergehenden Ansprüche, **dadurch gekennzeichnet, dass** Größe und/oder Form der Öffnungen über das gesamte Gestrick variiert/variieren, wodurch darin Gestrickbereiche mit unterschiedlichem Aussehen und unterschiedlichen Eigenschaften erzeugt werden.

13. Überzug nach einem der vorhergehenden Ansprüche, **dadurch gekennzeichnet, dass** die Öffnungen einen Umfang von 8 bis 80 mm und insbesondere zwischen 20 und 40 mm aufweisen.

14. Überzug nach einem der vorhergehenden Ansprüche, **dadurch gekennzeichnet, dass** die Maschen des Gestricks gelegte Maschen sind.

15. Überzug nach einem der vorhergehenden Ansprüche, **dadurch gekennzeichnet, dass** die Maschen aus einem einfachen oder zusammengesetzten Garn gestrickt sind.

16. Überzug nach einem der vorhergehenden Ansprüche, **dadurch gekennzeichnet, dass** die Maschen entweder aus einem einzigen Faden, insbesondere mit einer metrischen Nummer von 1 bis 30, beispielsweise von 1,5 bis 10, wenn er metallisch ist, oder aus einem Verbund mehrerer dieser Fäden, insbesondere 2 bis 5, gestrickt sind.

17. Überzug nach einem der vorhergehenden Ansprüche, **dadurch gekennzeichnet, dass** die Fäden, aus denen das Gestrick hergestellt ist, aus mindestens 90 Elementarfäden bestehen, wobei jeder Elementarfaden insbesondere einen Durchmesser von kleiner als 50 Mikrometern und vorzugsweise von 8 bis 20 Mikrometern besitzt.

18. Überzug nach einem der vorhergehenden Ansprüche, **dadurch gekennzeichnet, dass** die Dicke des Gestricks weniger als 5 mm und insbesondere 1 bis 3 mm beträgt.

19. Überzug nach einem der vorhergehenden Ansprüche, **dadurch gekennzeichnet, dass** das Gestrick eine Wärmeleitfähigkeit von unter 3 W·m⁻¹·K⁻¹ und insbesondere von 0,1 bis 0,2 W·m⁻¹·K⁻¹ aufweist.

20. Überzug nach einem der vorhergehenden Ansprüche, **dadurch gekennzeichnet, dass** das Gestrick eine Luftdurchlässigkeit von mindestens 2 m/s gemäß der Norm NF EN ISO 9237 aufweist.

21. Überzug nach einem der vorhergehenden Ansprüche, **dadurch gekennzeichnet, dass** das Gestrick zwei Seiten aufweist, die sich durch den Charakter der Fäden, die sie bilden, unterscheiden.

22. Überzug nach einem der vorhergehenden Ansprüche, **dadurch gekennzeichnet, dass** das Gestrick zwei gleiche Seiten aufweist.

23. Verwendung des Überzugs nach einem der vorhergehenden Ansprüche, um Werkzeuge für Glasscheiben bei Wärmebehandlungen vom Typ Abkühlen im Kühlofen, Biegen und Vorspannen an der Luft oder durch Kontakt wie Vollformen oder Biege- und/oder Vorspannrahmen zu bedecken.

24. Verwendung des Überzugs nach einem der Ansprüche 1 bis 22 zur Bedeckung von Trage- und/oder Transportelementen für heiße Glasscheiben wie Fördererrollen, Förderbänder und alle mechanischen oder pneumatischen Greifmittel, letztere insbesondere durch Ansaugen.
